# EUROPEAN PATENT SPECIFICATION

(11) **EP 1 276 960 B1**
(45) Date of publication and mention of the grant of the patent: **15.09.2004**
(21) Application number: 01943286.3
(22) Date of filing: 24.04.2001
(51) Int. Cl.: E21B 43/00

(54) **A METHOD FOR SEQUESTERING A FLUID WITHIN A HYDROCARBON CONTAINING FORMATION**
VERFAHREN ZUM ABKAPSELN VON FLUID IN ERDÖLLAGERSTÄTTEN
PROCEDE DE SEQUESTRATION D'UN FLUIDE DANS UNE FORMATION CONTENANT DES HYDROCARBURES

(30) Priority: 24.04.2000 US 199214 P; 24.04.2000 US 199213 P; 24.04.2000 US 199215 P
(43) Date of publication of application: 22.01.2003
(73) Proprietor: SHELL INTERNATIONALE RESEARCH MAATSCHAPPIJ B.V., 2596 HR Den Haag (NL)
(72) Inventor: VINEGAR, Harold, J., Houston, TX 77096 (US); WELLINGTON, Scott, Lee, Bellaire, TX 77401 (US); BERCHENKO, Ilya, Emil, Friendswood, TX 77546 (US); MAHER, Kevin, Albert, Bellaire, TX 77401 (US); DE ROUFFIGNAC, Eric, Houston, TX 77005 (US); BAXLEY, Phillip, Temmons, Bellaire, TX 77401 (US); ZHANG, Etuan, Houston, TX 77096 (US); KARANIKAS, John, Michael, Houston, TX 77027 (US)
(86) International application number: PCT/EP2001/004666
(87) International publication number: WO 2001/081716

(56) References cited:
- US-A- 2 914 309
- US-A- 4 306 621
- US-A- 4 787 452
- BYRER C W ET AL: "APPALACHIAN COALS: POTENTIAL RESERVOIRS FOR SEQUESTERING CARBON DIOXIDE EMISSIONS FROM POWER PLANTS WHILE ENHANCING CBM PRODUCTION" PROCEEDINGS OF THE INTERNATIONAL COALBED METHANE SYMPOSIUM, XX, XX, 3 May 1999 (1999-05-03), pages 319-327, XP001023510
- HANISCH C: "THE PROS AND CONS OF CARBON DIOXIDE DUMPING GLOBAL WARMING CONCERNS HAVE STIMULATED A SEARCH FOR CARBON SEQUESTRATION TECHNOLOGIES" ENVIRONMENTAL SCIENCE AND TECHNOLOGY, AMERICAN CHEMICAL SOCIETY. EASTON, PA, US, vol. 32, no. 1, 1 January 1998 (1998-01-01), pages 20A-24A, XP001015719 ISSN: 0013-936X

## Description

The invention relates to a method for sequestering a fluid within a hydrocarbon containing formation.

Carbon dioxide is produced by energy generation processes and combustion processes. The majority of the carbon dioxide so produced is released to the atmosphere, which is seen as a concern by environmentalists. The net release of carbon dioxide to the atmosphere may be reduced by utilizing the produced carbon dioxide and/or by storing, or sequestering, carbon dioxide, for example within a subterranean hydrocarbon containing formation.

A method for sequestering carbon dioxide within a subterranean hydrocarbon containing formation is disclosed in US-A-5566756. Herein it is disclosed that in an ideal situation the subterranean hydrocarbon containing formation is uniform, which means that a carbon dioxide concentration front will move radially outwardly from an injection well into the formation. According to US-A-5566756 there are, however, very few formations which show such uniformity.

US patent 4,787,452 discloses re-injection of fines into a steam flooded oil bearing formation. The article by C W Byrer "Appalachian coals, potential reservoirs for sequestering CO₂..." in the proceedings of the International Coalbed Symposium of 3 May 1999 discloses a method for CO₂ sequestration in coalbeds from which adsorbed methane has been removed.

It has now been found that an improved uniform subterranean hydrocarbon containing formation, suitable for the sequestering of fluids therein, can be made by subjecting the formation to an situ heat treatment. The hydrocarbon formation so made has a high permeability and a high adsorption capacity. The preferred in-situ heat treatment may involve conditions of pyrolysis and conditions of synthesis gas generation. It is an additional advantage that the hydrocarbon fluids and the synthesis gas so obtained from the hydrocarbon containing formation are valuable products as they may be used as energy resources, as feedstocks, and as consumer products.

Accordingly, the present invention provides a method for sequestering a fluid, which method comprises in-situ heat treating a hydrocarbon containing formation, which in-situ heat treatment involves pyrolysis of hydrocarbons present in the formation, and sequestering the fluid within the heat treated formation, wherein the heat treatment involves pyrolising hydrocarbons present in the formation by means of a plurability of heat sources such that superposition of heat produced from the heat sources occurs and the heat heated hydrocarbon containing formation has at least a portion with a permeability of a least 100 millidarcy and sequestered fluid is adsorbed onto hydrocarbon containing material in the formation.

The in-situ heat treatment of this invention is generally intended to achieve evaporation of water, if present in the formation, and conversion of hydrocarbons present in the formation. Hydrocarbons present in the formation may be converted by pyrolysis producing a hydrocarbon fluid, and optionally by the generation of synthesis gas in the presence of a synthesis gas generating fluid. In a preferred embodiment the in-situ heat treatment involves evaporation of water, pyrolysis and synthesis gas generation, in the order as indicated, on the understanding that if no water is present in the formation, evaporation of water may be omitted. Preferably the hydrocarbon containing formation for use in this invention contains kerogen. Kerogen is composed of organic matter which has been transformed due to a maturation process. Hydrocarbon containing formations which include kerogen are for example coal containing formations and oil shale containing formations. Alternatively, hydrocarbon containing formations may be treated which do not include kerogen, for example, formations containing heavy hydrocarbons (e.g., tar sands).

Hydrocarbon containing formations may be selected for the in situ heat treatment based on properties of the formation such that it would lead to the production of high quality fluids from the formation. For example, hydrocarbon containing formations which include kerogen may be assessed or selected for treatment based on the vitrinite reflectance of the kerogen. Vitrinite reflectance is often related to the elemental hydrogen to carbon ratio of a kerogen and the elemental oxygen to carbon ratio of the kerogen. Preferably the vitrinite reflectance is in the range of from 0.2% to 3%, more preferably from 0.5% to 2%. Such ranges of vitrinite reflectance tend to indicate that relatively higher quality hydrocarbon fluids may be produced from the formation.

The hydrocarbon containing formation may be selected for the in situ heat treatment based on the elemental hydrogen content of the hydrocarbon in the hydrocarbon containing formation. For example, a hydrocarbon containing formation may typically be selected which has a hydrocarbon with an elemental hydrogen content greater than 2 weight%, in particular greater than 3 weight%, or more in particular greater than 4 weight% when measured on a dry, ash-free basis. Preferably, the hydrocarbon in the hydrocarbon containing formation has an elemental hydrogen to carbon ratio in the range of from 0.5 to 2, in particular from 0.7 to 1.7. The elemental hydrogen content may significantly affect the composition of hydrocarbon fluids produced, for example through the formation of molecular hydrogen.

The hydrocarbons in the formation may typically have an elemental oxygen weight percentage of less than 20%, in particular less than 15%, and more in particular less than 10% when measured on a dry, ash-free basis. Typically, the elemental oxygen to carbon ratio is less than 0.15. In this manner, production of carbon dioxide and other oxides from an in situ conversion process of hydrocarbon containing material may be reduced. Frequently, the elemental oxygen to carbon ratio is in the range of from 0.03 to 0.12.

In situ heating the hydrocarbon containing formation generally includes providing a large amount of energy to heat sources located within the formation. Hydrocarbon containing formations may contain water. Water present in the hydrocarbon containing formation will tend to increase the amount of energy required to heat the hydrocarbon containing formation. Therefore, excessive amounts of heat and/or time may be required to heat a formation having a high moisture content. Preferably, the water content of the hydrocarbon containing formation is less than 15 weight%, more preferably less than 10 weight%.

The hydrocarbon containing formation or the portion thereof which is subjected to the in situ heat treatment may have a width of for example at least 0.5 m, or at least 1.5 m, or at least 2.4 m, or even at least 3.0 m. The width may be up to 100 m, or up to 1000 m, or even up to 2000 m, or more. The hydrocarbon containing formation or the portion thereof which is subjected to the in situ heat treatment may have a layer thickness of, for example, at least 2 m, more typically in the range of from 4 m to 100 m, more typically from 6 m to 60 m. The overburden of the hydrocarbon containing formation may have a thickness of, for example, at least 10 m, more typically in the range of from 20 m to 800 m or to 1000 m or more.

The hydrocarbon containing formation may be heated according to methods known in the art to a suitable temperature, by using one ore more heat sources placed in heater wells.

The heater wells may be positioned in the proximity of, or preferably within the hydrocarbon containing formation. Preferably a plurality of heat sources is employed so that a large (portion of the) hydrocarbon containing formation may be heated, and preferably such that superposition (overlapping) of heat produced from the heat sources occurs. Superposition of heat may decrease the time necessary to reach the desired temperature. Superposition of heat may allow for a relatively large spacing between adjacent heat sources, which may in turn provide a relatively slow rate of heating of the hydrocarbon containing formation, if desired. Superposition of heat will also provide uniform heating so that temperatures can be controlled to generate fluids uniformly and with desired properties throughout (a large portion of) the a hydrocarbon containing formation.

The spacing between heat sources may typically be within the range of from 5 m to 20 m, preferably from 8 m to 12 m. Positioning of substantially equidistant heat sources, in a triangular pattern, is preferred as it tends to provide more uniform heating to the formation in comparison to other patterns such as hexagons. In addition, a triangular pattern tends to provide faster heating to a predetermined temperature in comparison to other patterns such as hexagons for the same areal density of heaters.

Any conventional heat source may be applied. It is preferred to apply heat sources which are suitable for conductive heating, for example any kind of electrical heater or any kind of combustion heater. Less preferred are heat sources which apply radio frequency heating. Examples of in situ processes utilizing downhole heaters are illustrated in US-A-2634961, US-A-2732195, US-A-2780450, US-A-2789805, US-A-2923535 and US-A-4886118. The teaching of these documents is generally applicable in the practice of the present invention.

Because permeability and/or porosity are relatively quickly increased in the heated formation, produced vapours may flow considerable distances through the formation with relatively little pressure differential. Increases in permeability result from a reduction of mass of the heated portion due to evaporation of water, removal of hydrocarbons, and/or creation of fractures. For the recovery of the hydrocarbon fluids and other fluids, production wells may be provided. Fluid generated within the hydrocarbon containing formation may move a considerable distance through the hydrocarbon containing formation as a vapour. Such a considerable distance may include, for example, 50 20 m to 1000 m. The vapour may have a relatively small pressure drop across the considerable distance due to the permeability of the heated portion of the formation. Due to such permeability, a production well may only need to be provided in every other unit of heat sources or every third, fourth, fifth, sixth units of heat sources, which each may comprise a plurality of heater wells, for example two, three or six. The production wells may be cased wells which may have a production screen or perforated casings. In addition, the production wells may be surrounded by sand or gravel to minimize screen plugging.

In addition, water pumping wells or vacuum wells may be configured to remove liquid water from the hydrocarbon containing formation. For example, a plurality of water wells may surround all or the portion of the formation to be heated.

Water may be evaporated from the hydrocarbon containing formation at relatively low temperatures, for example at temperatures above 50 °C, frequently up to 250 °C, typically in the range of from 80 °C to 220 °C.

The hydrocarbon fluid produced as a result of the pyrolysis is a material which contains carbon and hydrogen in its molecular structure. It may also include other elements, such as nitrogen, oxygen and sulphur.

The hydrocarbon containing formation may be heated to a temperature at which pyrolysis can take place. The pyrolysis temperature range may include temperatures up to, for example, 900 °C. A majority of hydrocarbon fluids may be produced within a pyrolysis temperature range of from 250 °C to 400 °C, more preferably in the range of from 260 °C to 375 °C. A temperature sufficient to pyrolyse heavy hydrocarbons in a hydrocarbon containing formation of relatively low permeability may be within a range from 270 °C to 375 °C. In other embodiments, a temperature sufficient to pyrolyse heavy hydrocarbons may be within a range from 300 °C to 375 °C. If a hydrocarbon containing formation is heated throughout the entire pyrolysis temperature range, the formation may produce only small amounts of hydrogen towards the upper limit of the pyrolysis temperature range. After the available hydrogen is depleted, little hydrocarbon production from the formation may occur.

Preferably, the hydrocarbon containing formation or the portions thereof designated for pyrolysis is heated at a low heating rate. In general the heating rate will be at most 50 °C/day. Typically, the heating rate is less than 10 °C/day, more typically less than 3 °C/day, in particular less than 0.7 °C/day. Frequently the rate of heating will be more than 0.01 °C/day, in particular more than 0.1 °C/day. In particular, such low heating rates are applied in the pyrolysis temperature range. More in particular, heated portions of the hydrocarbon containing formation may be heated at such a rate for a time greater than 50% of the time needed to span the pyrolysis temperature range, preferably more than 75% of the time needed to span the pyrolysis temperature range, or more preferably more than 90 % of the time needed to span the pyrolysis temperature range.

The rate at which a hydrocarbon containing formation is heated may affect the quantity and quality of the hydrocarbon fluids produced from the hydrocarbon containing formation. For example, heating at high heating rates may produce a larger quantity of fluids from a hydrocarbon containing formation. The products of such a process, however, may be of a significantly lower quality than when heating using lower heating rates. Further, controlling the heating rate at less than 3 °C/day generally provides better uniformity of the temperature within the hydrocarbon containing formation.

Heating of a hydrocarbon containing formation to the pyrolysis temperature range may occur before substantial permeability has been generated within the hydrocarbon containing formation. An initial lack of permeability may prevent the transport of generated fluids from a pyrolysis zone within the formation. In this manner, as heat is initially transferred from the heat source to the hydrocarbon containing formation, the fluid pressure within the hydrocarbon containing formation may increase proximate to the heat source.

The pressure generated by expansion of the hydrocarbon fluids or other fluids generated in the formation may initially increase as an open path to the production well or any other pressure sink may not yet exist in the formation. In addition, the fluid pressure may exceed the lithostatic pressure, so that fractures in the hydrocarbon containing formation may form from the heat sources to the production wells. The generation of fractures within the heated portion then reduces the pressure, due to the production of hydrocarbon fluids through the production wells.

To maintain pressure within the hydrocarbon containing formation during the production of hydrocarbon fluids, a back pressure may be maintained at the production well. The pressure may be controlled by means of valves and/or by injecting gases into the hydrocarbon containing formation, for example hydrogen, carbon dioxide, carbon monoxide, nitrogen or methane, or water or steam. Injecting hydrogen is particularly preferred.

Valves may be configured to maintain, alter, and/or control the pressure within the hydrocarbon containing formation. For example, heat sources disposed within the hydrocarbon containing formation may be coupled to a valve. The valve may be configured to release fluid from the formation through the heat source or for the injection of a gas into the hydrocarbon containing formation. Alternatively, a pressure valve may be coupled to the production wells. Fluids released by the valves may be collected and transported to a surface unit for further processing and/or treatment.

The pressure may be controlled during pyrolysis and during the production of the hydrocarbon fluid from the formation. Typically, a pressure of at least 1.5 bar is applied, more typically at least 1.6 bar, in particular at least 1.8 bar. Frequently, when the pyrolysis temperature is at least 300 °C, a pressure of at least 1.6 bar may be applied, and below 300 °C, a pressure of at least 1.8 bar may be applied. The upper limit of the pressure may be determined by the structure and the weight of the overburden. Frequently, under practical conditions, the pressure is less than 70 bar, more frequently less than 60 bar or even less than 50 bar. The pressure may advantageously be controlled within a range of from 2 bar to 18 bar or 20 bar, or alternatively within a range of from 20 bar to 36 bar.

Unless indicated otherwise, the term "pressure" is herein deemed to refer to absolute pressure. The pressure prevailing during the production of hydrocarbon fluid from the formation or during synthesis gas generation is deemed to be measured in a production well, in the direct proximity of the relevant portion of the formation where pyrolysis or synthesis gas production takes place.

In a preferred embodiment, a partial pressure of hydrogen is maintained. Typically the partial pressure is at least 0.2 bar, suitably at least 0.4 bar, for example up to 35 bar or even up to 50 bar, more typically in the range of from 0.6 to 20 bar, in particular in the range from 1 bar to 10 bar, more particularly in the range of from 5 bar to 7 bar. Maintaining a hydrogen partial pressure within the formation in particular increases the API gravity of produced hydrocarbon fluids and reduces the production of long chain hydrocarbon fluids.

At least 20%, typically at least 25%, preferably at least 35% of the initial total organic carbon content of the hydrocarbon containing formation, or the portion thereof subjected to pyrolysis may be transformed into hydrocarbon fluids. In practice frequently at most 90% of the total organic carbon content of the hydrocarbon containing formation, or the portion thereof which is subjected to pyrolysis, may be transformed into hydrocarbon fluids, more frequently this may be at most 80%, or at most 70% or at most 60%.

The pyrolysis and the synthesis gas generation produce a high, uniform permeability throughout the hydrocarbon containing formation or the treated portion thereof. A high, uniform permeability allows the generation of synthesis gas with lower injection costs and without fingering or bypassing of large sections of the formation. The portion also has a large surface area and/or a large surface area/volume. The large surface area may allow synthesis gas producing reactions to be substantially at equilibrium conditions during synthesis gas generation. The high, uniform permeability can result in a relatively high recovery efficiency of synthesis gas, as compared to synthesis gas generation in a hydrocarbon containing formation which has not been subjected to pyrolysis.

Pyrolysis of at least some hydrocarbon containing material may in some embodiments convert 20% of carbon initially available. Synthesis gas generation may convert at least (an additional) 10% and typically up to (an additional) 70% of the carbon initially available. In this manner, in situ production of synthesis gas from a hydrocarbon containing formation, in addition to pyrolysis, may allow conversion of larger amounts of carbon initially available within the portion.

Synthesis gas may be produced from the formation prior to, together with, or subsequent to producing the hydrocarbon fluid from the formation. The synthesis gas, although generally defined as a mixture of hydrogen (H₂) and carbon monoxide (CO), may comprise additional components such as water, carbon dioxide (CO₂), methane and other gases.

The synthesis gas generation may be commenced before and/or after hydrocarbon fluid production decreases to an uneconomical level. In this manner, heat provided to pyrolyse may also be used to generate synthesis gas. For example, if a portion of the formation is 375 °C after pyrolysation, then less additional heat is generally required to heat such portion to a temperature sufficient to support synthesis gas generation. In certain instances heat may be provided from one or more heat sources to heat the formation to a temperature sufficient to allow synthesis gas generation, for example in the range of from 400 °C to 1200 °C or higher. At the upper end of the temperature range, the generated synthesis gas may include mostly H₂ and CO, in for example a 1:1 mole ratio. At the lower end of this temperature range, the generated synthesis gas may have a higher H₂ to CO ratio.

Heating wells, heating sources and production wells within the formation for evaporation of water, or for pyrolysing and producing hydrocarbon fluids from the formation may be utilized during synthesis gas production as an injection well to introduce synthesis gas producing fluid, as a production well, or as a heat source to heat the formation. Heat sources for the synthesis gas production may include any of the heat sources as disclosed hereinbefore. Alternatively, heating may include transferring heat from a heat transfer fluid, for example steam or combustion products from a burner, flowing within a plurality of wellbores within the formation.

A synthesis gas generating fluid, for example liquid water, steam, carbon dioxide, air, oxygen, hydrocarbons, and mixtures thereof, may be provided to the formation. For example, the synthesis gas generating fluid mixture may include steam and oxygen. The synthesis gas generating fluid may include aqueous fluid produced by pyrolysis of hydrocarbon containing material within another portion of the formation. Providing the synthesis gas generating fluid may alternatively include raising a water table of the formation to allow water to flow into it. Synthesis gas generating fluid may also be provided through an injection wellbore. The synthesis gas generating fluid will generally react with carbon in the formation to form H₂, water (as liquid or as steam), CO₂, and/or CO.

Carbon dioxide may be separated from the synthesis gas and may be re-injected into the formation with the synthesis gas generating fluid. By a shift of the prevailing chemical equilibrium reacticns, carbon dioxide added to the synthesis gas generating fluid may substantially inhibit further production of carbon dioxide during the synthesis gas generation. The carbon dioxide may also react with carbon in the formation to generate carbon monoxide.

Hydrocarbons such as ethane may be added to the synthesis gas generating fluid. When introduced into the formation, the hydrocarbons may crack to form hydrogen and/or methane. The presence of methane in the produced synthesis gas may increase its heating value.

Synthesis gas generating reactions are typically endothermic reactions. Heat may be added to the formation during synthesis gas production to keep the formation temperature at the desired level. Heat may be added from heat sources and/or from introducing synthesis gas generating fluid which has a higher temperature than the temperature of the formation. As an alternative, an oxidant may be added to the synthesis gas generating fluid, for example air, oxygen enriched air, oxygen, hydrogen peroxide, other oxidizing fluids, or combinations thereof. The oxidant may react with carbon within the formation to generate heat, and to result in production of CO₂ and/or CO. In a preferred embodiment oxygen and water (or steam) are provided to the formation, for example in a mole ratio of from 1:2 to 1:10, preferably from 1:3 to 1:7, for example 1:4.

The hydrocarbon containing formation may be maintained at a relatively high pressure during synthesis gas production. Synthesis gas may be generated in a wide pressure range, for example between 1 bar and 100 bar, more typically between 2 bar and 80 bar, especially between 5 bar and 60 bar. High operating pressures may result in an increased production of H₂. High operating pressures may allow generation of electricity by passing produced synthesis gas through a turbii.e, and they may allow for smaller collection conduits to transport produced synthesis gas.

The synthesis gas may be generated in a wide temperature range, such as between 400 °C and 1200 °C, more typically between 600 °C and 1000 °C. At a relatively low synthesis gas generation temperature a synthesis gas may be produced which has a high H₂ to CO ratio. A relatively high formation temperature may produce a synthesis gas having a H₂ to CO ratio that approaches 1, and the stream may include mostly (and in some cases substantially only) H₂ and CO. At a formation temperature of about 700 °C, the formation may produce a synthesis gas having a H₂ to CO ratio of 2. Typically synthesis gas may be generated which has a H₂ to CO mole ratio in the range of from 1:4 to 8:1, more typically in the range of from 1:2 to 4:1, in particular in the range of from 1:1 to 2.5:1. Certain embodiments may include blending a first synthesis gas with a second synthesis gas to produce synthesis gas of a desired composition. The first and the second synthesis gases may be produced from different portions of the formation.

The hydrocarbon containing formation or the portion thereof which has been subjected to the in-situ heat treatment may be allowed to cool or may be cooled to form a cooled, spent formation. After the situ heat treatment a fluid is sequestered within the formation. Fluids which may be sequestered include one or more of for example nitrogen oxides, sulphur oxides and carbon oxides, in particular carbon dioxide.

To store a significant amount of fluid within the formation, the temperature of the formation will often need to be less than 100 °C, for example down to 20 °C. For example, a higher quantity of fluid may be adsorbed in the formation at a lower temperature. In addition, cooling the formation may strengthen it. Water may be introduced into the formation to generate steam and reduce the temperature of the formation. The steam may be removed from the formation. The steam may be utilized for various purposes, for example for heating another portion of the formation, for generating synthesis gas in an adjacent portion of the formation, or as a steam flood in an oil reservoir.

As a result of the in situ heat treatment, the hydrocarbon containing formation has increased in permeability. The increase in permeability may be by a factor of more than 1000, 10000, or even 100000. For example, while the permeability of an untreated hydrocarbon containing formation may be 0.1 millidarcy (9.9 x 10⁻¹⁷ m²) or less, as a result of the in situ heat treatment the permeability may have increased, for example, to at least 10 millidarcy, typically to at least 100 millidarcy, more typically to at least 1 Darcy, preferably to at least 10 Darcy, more preferably to at least 20 Darcy, in particular to at least 50 Darcy. In practice, the permeability will frequently remain below 100 Darcy.

Uniform heating of the hydrocarbon containing formation during the in situ heat treatment is preferred as this generally results in a more uniform increase in the permeability. In this respect, conductive heating and in more particular superposition (e.g., overlapping) of heat from one or more heat sources are preferred ways of heating. In a quantitative sense, the term "uniform permeability" is herein understood to mean that the permeability of the in situ heat treated (portion of the) formation does not vary by more than a factor of 10, i.e. the assessed permeability of any selected section in the formation does not vary by more than a factor of ten from the assessed average permeability of such selected portion.

The removal of hydrocarbons from the hydrocarbon containing formation as described in any of the above embodiments generally also occurs on a microscopic scale. Hydrocarbons may be removed from micropores within the portion due to heating. Micropores may be the pores having a cross-sectional dimension of less than 1000 Å. Thus, in situ heating of the hydrocarbon containing formation as described in any of the above embodiments may also uniformly increase the porosity of the hydrocarbon containing formation.

Further, the physical characteristics of the hydrocarbon containing formation after the in situ heat treatment, in particular after the pyrolysis, are generally similar to those of a porous bed. For example, the hydrocarbon containing formation after the heat treatment may comprise particles having sizes of several millimeters. A gas injected into a pyrolysed portion of a hydrocarbon containing formation may readily and uniformly contact the carbon and/or hydrocarbons remaining in the formation, and gases produced by heating the hydrocarbons may be transferred a significant distance within the heated portion of the formation with a minimal pressure loss. This is advantageous in particular as the hydrocarbon containing formation is to be used for sequestering of fluids. Higher permeability generally results in lower compression costs.

After the formation is cooled, fluid may be pressurized and sequestered in the formation. Sequestering fluid within the formation may result in a significant reduction or elimination of fluid that is released to the environment due to operation of the present in situ process.

The fluid to be sequestered may be injected under pressure into the cooled, spent formation and adsorbed onto hydrocarbon containing material in the formation. The fluid may be pressurised before injection typically to a pressure of at least 2 bar, for example up to 100 bar or even up to 120 bar, preferably in the range of from 5 bar to 50 bar. A back pressure may be maintained in the formation to a maximum of the fluid pressure, to facilitate absorption. The fluid being absorbed may displace methane, if present, from the in situ heat treated formation. Subsequent addition of water to the formation may inhibit desorption of the carbon dioxide.

The hydrocarbon fluids obtained from the hydrocarbon containing formation may be used as energy resources, as feedstocks, and as consumer products. The synthesis gases described herein may be converted to hydrocarbons, which include methanol, or to other products, such as ammonia. The synthesis gas may also be used as a source of energy.

The following examples illustrate the invention.

### Example 1

Hydrocarbon fluids were produced from a coal containing formation by in situ pyrolysis. The coal was a high volatile bituminous "C" coal having a vitrinite reflectance of 0.54%, present as a formation layer of about 4.9 m thickness. Three heat sources were disposed in the coal formation in a triangular configuration with a 2 m spacing on a side. A production well was located proximate the center of the heat source pattern and equidistant from each of the heat sources. A grout wall was formed around the heat source pattern and the production wells, to inhibit influx of water into the portion of the formation subjected to pyrolysis. Temperatures observation wells were disposed within the triangular configuration of heating wells.

The temperature of the coal formation within the triangular configuration was heated to enable pyrolysis. Hydrocarbon fluids were collected at 1 bar pressure in the coal formation within the triangular configuration. The condensable hydrocarbon product obtained at 1 bar pressure contained about 2 weight% of C₂₅ hydrocarbons, whereas the content of C₂₅ hydrocarbons of the condensable hydrocarbon product obtained at 8 bar pressure was about 0.1 weight%.

An experiment was conducted on the formation to measure the uniform permeability of the formation after the pyrolysis. To this end, ten minute pulses of CO₂ were injected into the formation at the production well and produced at each of the heating wells. The CO₂ reached each of the three different heating wells at approximately the same time. The yield of CO₂ from each of the three different wells was also approximately equal over time. The fact that the first CO₂ arrival only occurs approximately 18 minutes after start of the CO₂ pulse indicates that no preferential paths had been created between the production well and the heating wells. The results show that the formation has a high degree of uniformity, as it allows a carbon dioxide concentration front to move radially outwardly from an injection well into the formation.

The in situ permeability was measured using steady state gas injection and pressure gradient measurements after the pyrolysis and synthesis gas formation stages were complete. The measured permeability inside the heater triangle varied from 4.5 darcy to 39 darcy, thereby indicating that the permeability was high and relatively uniform. The before-treatment average permeability was only 50 millidarcy.

### Example 2

Samples of sub-bituminous coal from Gillette, Wyoming, were subjected to pyrolysis conditions. Samples of the un-pyrolysed coal and the pyrolysed coal were then tested for their ability to adsorb carbon dioxide.

It was found that that at 25 bar pressure and 25 °C, the unpyrolysed coal absorbed 25,5 standard cubic meter per ton (900 standard cubic feet per ton), whilst the pyrolysed coal adsorbed 43,3 standard cubic meter per ton (1600 standard cubic feet per ton).

## Claims

1. A method for sequestering a fluid, which method comprises in-situ heat treating a hydrocarbon containing formation, and sequestering the fluid within the heat treated formation; **characterised in that** the in-situ heat treatment involves pyrolysing hydrocarbons present in the formation by means of a plurality of heat sources such that superposition of heat produced from the heat sources occurs, that said in-situ heat treated hydrocarbon containing formation has at least a portion with a permeability of at least 100 millidarcy and that sequestered fluid is adsorbed onto hydrocarbon containing material in the formation.

2. A method as claimed in claim 1, wherein the hydrocarbon containing formation comprises a kerogen, such as coal or oil shale, or heavy hydrocarbons, such as a tar sand.

3. A method as claimed in claim 1 or 2, wherein the in-situ heating is achieved by means of a heat source which is suitable for conductive heating.

4. A method as claimed in any of claims 1-3, wherein the in-situ heat treatment further involves synthesis gas generation in the presence of a synthesis gas generating fluid.

5. A method as claimed in any of claims 1-4, wherein the fluid to be sequestered comprises carbon dioxide.

6. A method as claimed in any of claims 1-5, wherein the fluid is sequestered at a temperature in the range of from 0 °C to 100 °C.

7. A method as claimed in any of claims 1-6, wherein the fluid to be sequestered is pressurised to a pressure in the range of from 2 bar to 120 bar.

8. A method as claimed in any one of claims 1-8, wherein said in-situ heat treated hydrocarbon-containing formation has at least a portion having a substantially uniform permeability of at least 10 darcy.

9. The method of any preceding claim, wherein the heat treated hydrocarbon containing formation comprises micropores having a cross-sectional dimension of less than 1000 Å.

10. The method of any preceding claim, wherein the heat treated hydrocarbon containing formation comprises particles having sizes of several millimetres and has physical characteristics substantially similar ro those of a porous bed.

## Patentansprüche

1. Verfahren zum Abkapseln eines Fluids, welches Verfahren ein in situ-Wärmebehandeln einer Kohlenwasserstoffe enthaltenden Formation und ein Sequestrieren des Fluids innerhalb der wärmebehandelten Formation umfaßt, **dadurch gekennzeichnet, daß** die in situ-Wärmebehandlung ein Pyrolysieren von in der Formation vorliegenden Kohlenwasserstoffen mittels einer Mehrzahl von Wärmequellen in solcher Weise involviert, daß eine Überlagerung von aus den Wärmequellen produzierter Wärme eintritt, daß die in situ wärmebehandelte Kohlenwasserstoffe enthaltende Formation wenigstens einen Abschnitt mit einer Permeabilität von wenigstens 100 Millidarcy aufweist und daß das sequestrierte Fluid an Kohlenwasserstoffe enthaltendes Material in der Formation adsorbiert wird.

2. Verfahren nach Anspruch 1, worin die Kohlenwasserstoffe enthaltende Formation ein Kerogen, wie Kohle oder Ölschiefer, oder schwere Kohlenwasserstoffe wie einen Teersand umfaßt.

3. Verfahren nach Anspruch 1 oder 2, worin das in situ-Erhitzen mittels einer Wärmequelle erzielt wird, die für ein Erhitzen durch Leitung geeignet ist.

4. Verfahren nach einem der Ansprüche 1 bis 3, worin die in situ-Wärmebehandlung weiterhin eine Synthesegasbildung in Gegenwart eines Synthesegas generierenden Fluids umfaßt.

5. Verfahren nach einem der Ansprüche 1 bis 4, worin das zu sequestrierende Fluid Kohlendioxid umfaßt.

6. Verfahren nach einem der Ansprüche 1 bis 5, worin das Fluid bei einer Temperatur im Bereich von 0°C bis 100°C sequestriert wird.

7. Verfahren nach einem der Ansprüche 1 bis 6, worin das zu sequestrierende Fluid auf einen Druck im Bereich von 2 bar bis 120 bar unter Druck gesetzt wird.

8. Verfahren nach einem der Ansprüche 1 bis 7, worin die in situ-wärmebehandelte Kohlenwasserstoffe enthaltende Formation wenigstens einen Abschnitt mit einer im wesentlichen gleichförmigen Permeabilität von wenigstens 10 Darcy aufweist.

9. Verfahren nach einem der vorstehenden Ansprüche, worin die wärmebehandelte Kohlenwasserstoffe enthaltende Formation Mikroporen mit einer Querschnittsabmessung von unter 1.000 Å umfaßt.

10. Verfahren nach einem der vorstehenden Ansprüche, worin die wärmebehandelte Kohlenwasserstoffe enthaltende Formation Teilchen mit Größen von mehreren Millimetern umfaßt und physikalische Eigenschaften aufweist, die im wesentlichen denen eines porösen Bettes ähnlich sind.

## Revendications

1. Procédé de séquestration d'un fluide, lequel procédé comprend le traitement à chaud in situ d'une formation contenant des hydrocarbures, et la séquestration du fluide à l'intérieur de la formation traitée à chaud, **caractérisé en ce que** le traitement à chaud in situ comprend la pyrolyse des hydrocarbures présents dans la formation au moyen d'une pluralité de sources de chaleur de telle sorte qu'une superposition de chaleur produite à partir des sources de chaleur se produise, que ladite formation contenant des hydrocarbures traitée à chaud in situ comporte au moins une partie avec une perméabilité d'au moins 100 millidarcy et que le fluide séquestré soit adsorbé sur la matière contenant des hydrocarbures dans la formation.

2. Procédé suivant la revendication 1, dans lequel la formation contenant des hydrocarbures comprend un kérogène, comme du charbon ou du schiste bitumineux, ou des hydrocarbures lourds, tels qu'un sable asphaltique.

3. Procédé suivant l'un ou l'autre des revendications 1 et 2, dans lequel le chauffage in situ est réalisé au moyen d'une source de chaleur qui convient pour un chauffage par conduction.

4. Procédé suivant l'une quelconque des revendications 1 à 3, dans lequel le traitement à chaud in situ comprend de plus la génération de gaz de synthèse en présence d'un fluide générateur de gaz de synthèse.

5. Procédé suivant l'une quelconque des revendications 1 à 4, dans lequel le fluide à séquestrer comprend du dioxyde de carbone.

6. Procédé suivant l'une quelconque des revendications 1 à 5, dans lequel le fluide est séquestré à une température allant de 0°C à 100°C.

7. Procédé suivant l'une quelconque des revendications 1 à 6, dans lequel le fluide à séquestrer est pressurisé à une pression allant de 2 bars à 120 bars.

8. Procédé suivant l'une quelconque des revendications 1 à 8, dans lequel la formation contenant des hydrocarbures traitée à chaud in situ précitée comporte au moins une partie ayant une perméabilité sensiblement uniforme d'au moins 10 darcy.

9. Procédé suivant l'une quelconque des revendications précédentes, dans lequel la formation contenant des hydrocarbures traitée à chaud comprend des micropores ayant une dimension en coupe transversale de moins de 1000 Å.

10. Procédé suivant l'une quelconque des revendications précédentes, dans lequel la formation contenant des hydrocarbures traitée à chaud comprend des particules ayant des tailles de plusieurs millimètres et a des caractéristiques physiques sensiblement similaires à celles d'un lit poreux.
